# EUROPÄISCHE PATENTSCHRIFT

(11) **EP 0 473 621 B1**
(45) Veröffentlichungstag und Bekanntmachung des Hinweises auf die Patenterteilung: **17.08.1994**
(21) Anmeldenummer: 90906972.6
(22) Anmeldetag: 10.05.1990
(51) Int. Cl.: C01B 13/18, C01G 29/00

(54) **VERFAHREN ZUR HERSTELLUNG VON OXIDISCHEN KERAMIKPULVERN**
PROCESS FOR MANUFACTURING POWDERED CERAMIC OXIDES
PROCEDE POUR PRODUIRE DES POUDRES CERAMIQUES A BASE D'OXYDES

(30) Priorität: 22.05.1989 DE 3916643
(43) Veröffentlichungstag der Anmeldung: 11.03.1992
(73) Patentinhaber: MERCK PATENT GmbH, D-64271 Darmstadt (DE)
(72) Erfinder: KUNTZ, Matthias, D-6100 Mühltal-Traisa (DE); BAUER, Gerd, D-6100 Darmstadt (DE); GROBELSEK, Ingrid, D-6100 Darmstadt (DE)
(86) Internationale Anmeldenummer: EP9000747
(87) Internationale Veröffentlichungsnummer: WO9014307

(56) Entgegenhaltungen:
- WO-A-89/12027
- US-A- 2 985 506
- US-A- 4 065 544
- Materials Letters, Band 6, Nr. 11, 12. Juli 1988, Elsevier Science Publishers B.V. (North-Holland Physics Publishing Division), J.J. Kingsley et al.: "A novel combustion process for the synthesis of fine particle alpha-aluminia and related oxide materials", Seiten 427-432, s. Seite 427, rechte Spalte

## Beschreibung

Die Erfindung betrifft ein Verfahren zur Herstellung von oxidischen Keramikpulvern, womit diese hinsichtlich Teilchengröße und Teilchenform, Teilchengrößenverteilung, Homogenität und Dichte besonders günstig erhalten werden können.

Keramische Pulver auf Basis von ein- oder mehrkomponentigen Metalloxiden werden in steigendem Maße zur Herstellung von Spezialkeramiken benötigt. Haupteinsatzgebiete hierfür sind beispielsweise die Bereiche der Hochleistungswerkstoffe, etwa da, wo es auf besonders hohe Verschleiß- und/oder Temperaturfestigkeit ankommt. Typische Beispiele bierfür sind Aluminiumoxid, Magnesiumoxid, Aluminiumoxid-Siliziumdioxid-Verbindungen, mit Zirkondioxid verstärktes Aluminiumoxid, mit Yttrium stabilisiertes Zirkondioxid etc., die zu Formteilen oder Werkstücken verarbeitet und dann zur endgültigen Keramik gesintert bzw. gebrannt werden. Ein weiteres Haupteinsatzgebiet ist die Elektronik, wo Keramikmaterialien etwa als Trägerwerkstoffe, Dielektrika, Ferroelektrika, Ferrite und Piezokeramiken verwendet werden. Gängige Anwendungen derartiger Hochleistungskeramiken sind IC-Substrate und -Gehäuse, Elektrodenmaterialien, Kondensatoren, Varistoren, Thermistoren, Piezosensoren, Weich- und Hartferrite. Typische Materialien sind beispielsweise dotierte Zinkoxide, Titanate, Zirkonate, Aluminiumoxide, Bariumtitanat, Blei-Zirkonat-Titanat (PZT), Lauthanchromite, Y₂O₃/ZrO₂,-β/β''-Al₂O₃.

Ein besonders augenfälliges Anwendungsbeispiel von Spezialkeramiken sind die in neuester Zeit bekanntgewordenen Hochtemperatursupraleiter, die sich überwiegend aus Oxiden von Barium, Kupfer, Wismut oder Thallium und Yttrium bzw. Lanthan zusammensetzen.

Ausgangsmaterialien für derartige Keramiken sind überwiegend entsprechend zusammengesetzte Metalloxidpulver. Die typischen zentralen Verfabrensschritte bei der Herstellung derartiger Keramiken sind das Formen der Pulvermassen zu Bauteilen bzw. das Beschichten hiermit von Substraten und die anschließende Sinterung zur Keramik, wobei je nach Material meist Temperaturen zwischen etwa 800 und etwa 1500 °C zur Anwendung gelangen.

Die erforderlichen Sintertemperaturen sowie das Sinterverhalten der Keramikpulver und die Leistungsfähigkeit der erhaltenen Keramiken werden entscheidend von der Qualität der Ausgangsmaterialien beeinflußt. Die wesentlichen Qualitätsmerkmale für die Oxidpulver sind die Teilchenform, Teilchengröße, Teilchengrößenverteilung, die Dichte der Partikel und die chemische Homogenität. Pulver mit groben Teilchen oder breiter Teilchengrößenverteilung, mit unregelmäßig geformter, poröser oder hohler Partikelstruktur lassen sich bei der Formgebung nicht optimal kompaktieren, so daß das Sintern erschwert und die endgültige Keramik ebenfalls nicht weitgehend an die theoretisch möglichen Eigenschaften bei Dichte, Festigkeit, elektrische Leitfähigkeit, magnetische Suszeptibilität, Dielektrizitätskonstante etc. herankommt. Ein Ausgleich chemischer Inhomogenitäten im Ausgangspulver läßt sich im Sinterprozeß - Sintern ist als Festkörperreaktion in der Regel diffusionskontrolliert - nur schwer erreichen. Heterogenitäten des Pulvers werden sich daher auch in der gesinterten Keramik mehr oder weniger wiederfinden und deren Eigenschaften ungünstig beeinflussen.

Es ergibt sich daher, daß, wenn an die Keramiken besondere Ansprüche gestellt werden, die einzusetzenden Oxidpulver nur dann als optimal anzusehen sind, wenn die Partikel klein, das heißt, etwa zwischen 0,01 und 10 µm, und mit enger Teilchengrößenverteilung, kugelförmig, kompakt und in ihrer chemischen Zusammensetzung homogen sind.

Es versteht sich daher von selbst, daß die bislang üblichen und in der technischen Produktion vorherrschenden Verfahren zur Herstellung von oxidischen Keramikpulvern, die im wesentlichen darauf beruhen, die Ausgangsoxide zu vermahlen und zu mischen, die Mischungen gegebenenfalls zu calcinieren und erneut zu vermahlen etc., nicht die als optimal erachteten Pulvereigenschaften liefern können.

Alternative Techniken hierzu mit vornehmlicher Zielrichtung einer besseren Homogenität der Partikel sind bereits diskutiert worden, konnten sich in der Praxis offenbar aber noch nicht durchsetzen. Eine Übersicht hierüber läßt sich beispielsweise gewinnen aus den Publikationen D.W. Johnson, Jr., "Nonconventional Powder Preparation Techniques", Ceramic Bulletin 60, 221 (1981) und D.W. Johnson, Jr., P.K. Gallagher, "Reactive Powders from Solution" in "Ceramic Processing Before Firing", G.Y. Onoda, Jr., L.L. Herch (Ed.), Wiley & Sons, New York (1978). Dieser Literatur läßt sich entnehmen, daß zur Herstellung feinster, homogen zusammengesetzter Oxidpulver solche Verfahren günstigere Ergebnisse erwarten lassen, bei denen die Homogenisierung durch Lösung erfolgt und die keramischen Pulver hieraus durch Sprühreaktionsverfahren gewonnen werden. Durch Lösung entsprechender Metallsalze in den für die Keramik erforderlichen Proportionen - Reaktionen der Komponenten miteinander in der Lösung und Ausfällungen müssen jedoch ausgeschlossen sein - ist die Homogenität bereits auf atomarer/molekularer Ebene gewährleistet. Durch Sprühen der Lösung in eine oder mehrere heiße Reaktionszonen ("Sprühpyrolyse", "Sprührösten", "Evaporativ Decomposition of Solutions" (EDS)) oder in bzw. durch eine Flamme ("Solution Combustion") wird den Lösungströpfchen mehr oder weniger schnell das Lösungsmittel entzogen und es wird eine mehr oder weniger rasche bzw. vollständige Zersetzung bis hin zum (Misch-)Oxidpulver bewirkt.

Systembedingt sind diese Verfahren äußerst energieaufwendig und unter wirtschaftlichen Gesichtspunkten sehr ungünstig.

Diese Verfahren führen darüber hinaus auch nicht zu einem optimalen Ergebnis. Dies liegt an der prinzipiellen Verfahrenskonstellation, daß hierbei den durch Versprühen in den Pyrolysereaktor - meist sind dies beheizte Rohröfen - erzeugten Lösungströpfchen die zum Verdunsten des Lösungsmittels und weiter zur pyrolytischen Zersetzung erforderliche Wärmeenergie durch Strahlung oder zum Teil durch Konvektion von außen zugeführt wird. Der Wärmezutritt zum System Lösungströpfchen/Salzpartikel/Oxidpartikel ist naturgemäß langsam und durch den durch die Lösungsmittelverdunstung erfolgenden Wärmeentzug darüber hinaus in der entsprechenden Reaktionszone gehindert, so daß für eine vollständige Umwandlung in das Oxid vergleichsweise hohe Temperaturen und/oder lange Verweilzeiten erforderlich sind.

Entscheidend für die Merkmale des so erhaltenen Oxidpartikels ist jedoch der Aufheizvorgang des Systems Lösungströpfchen/Salzpartikel/Oxidpartikel von außen nach innen. Dem primären Lösungströpfchen wird durch die Wärmeeinwirkung von der Oberfläche her Lösungsmittel entzogen und es wird im Inneren, insbesondere solange noch Lösungsmittel vorhanden ist, nur langsam aufgeheizt. Es bildet sich deshalb von außen her zunächst eine Salzschale bzw. -kruste, die eine sich mehr und mehr konzentrierende Lösung umschließt, und die wiederum von außen her in Oxid umgewandelt wird. Durch die Aufkonzentrierung kann es bei Mischlösungssystemen zu chemischen Inhomogenitäten im resultierenden Festpartikel kommen. Je nachdem wie schnell der Durchheizvorgang und die Verdunstung des Lösungskerns im Partikel vonstatten geht, entstehen Hohlpartikel, poröse Partikel oder durch Zerplatzen unregelmäßig geformte Bruchstücke. Dieses Phänomen ist deutlich angesprochen, z. B. in der Publikation E. Ivers-Tiffée, K. Seitz, Ceramic Bulletin 66, 1384 (1987).

Die so erhaltenen Oxidpulver sind somit in ihrer Partikelstruktur keinesfalls sphärisch und kompakt, sondern sie sind porös und darüber hinaus immer noch nicht ausreichend homogen in Bezug auf Form, Teilchengröße, Teilchengrößenverteilung sowie chemischer Zusammensetzung. Es werden also je nach Qualitätsanspruch weitere Mahl- und Klassierungsvorgänge erforderlich. Da poröse und insbesondere hohlkugelförmige Partikel bekanntlich auch durch Calcinieren, Pressen und Sintern unter Druck praktisch nicht weiter kompaktierbar sind, ist man dementsprechend in der gesinterten Keramik meist von der als optimal angesehenen theoretischen Dichte noch weit entfernt.

Beim Sinterprozeß von Keramikteilen bleibt das durch hohlkugelförmiges Material eingebrachte Leervolumen allseitig vom Festkörper umschlossen, aus dem die enthaltenen Gase erst durch Diffusion durch die Festkörpermatrix entfernt werden müßten. Dies ist unter praktikablem Aufwand nicht möglich, so daß entsprechende Fehler in der fertigen Keramik erhalten bleiben.

Der vorliegenden Erfindung lag daher die Aufgabe zugrunde, ein Verfahren aufzufinden, bei dem oxidische Keramikpulver erhalten werden, die die Nachteile der mit bekannten Verfahren hergestellten Materialien nicht aufweisen und mit denen Hochleistungskeramiken mit optimalen Eigenschaften erhalten werden können.

Die Erfindung geht von der Zielvorstellung aus, in einem Pyrolyseverfahren die Wärmeenergie dem System Losungströpfchen/Salzpartikel/Oxidpartikel nicht von aussen zuzuführen, sondern an bzw. in diesem System direkt und möglichst schlagartig entstehen zu lassen. Durch eine solchermaßen räumlich und zeitlich eng begrenzte Energieentwicklung sollte dieses System einer extrem hohen Energiedichte unterliegen, so daß es zu einer schlagartigen Durchreaktion kommt und das resultierende Oxid durch Aufschmelzung unter eigenen Oberflächenspannungskräften in Form von massiven, kompakten, sphärischen Partikeln anfällt.

Überraschend wurde nun gefunden, daß ein solches Ergebnis erzielt wird, wenn man wäßrige Lösungen entsprechender Metallnitrate in Gegenwart von als Brennstoff fungierenden organischen Substanzen oder elementarem Kohlenstoff sprühpyrolytisch verbrennt, wobei man für eine Abstimmung der Menge an Nitrat in der Lösung auf die Menge an Brennstoff sorgt, so daß nach Zündung eine sich weitgehend selbst tragende Verbrennung abläuft, bei der Nitratsauerstoff im wesentlichen die vollständige Verbrennung des Brennstoffes bewirkt.

Gegenstand der Erfindung ist somit ein sprühpyrolytisches Verfahren zur Herstellung von oxidischen Keramikpulvern durch Verbrennung entsprechende Metallnitrate enthaltender wäßriger Lösungen in Gegenwart von als Brennstoff fungierenden organischen Substanzen oder elementarem Kohlenstoff, wobei die Menge an Nitrat in der Lösung auf die Menge an Brennstoff so abgestimmt ist, daß nach Zündung eine sich weitgehend selbst tragende Verbrennung abläuft, bei der der Nitratsauerstoff im wesentlichen die vollständige Verbrennung des Brennstoffes bewirkt.

Das dem erfindungsgemäßen Verfahren zugrundeliegende Prinzip ist, daß in dem System Tröpfchen/Partikel selbst eine hochexotherme Reaktion, nämlich die Verbrennung des Brennstoffanteiles mit Hilfe von im wesentlichen aus dem Metallnitrat generiertem Sauerstoff, abläuft, die zu der geforderten hohen Energiedichte und somit zu dem gewünschten Ergebnis führt. Entscheidendes Merkmal des erfindungsgemäßen Verfahrens und Unterscheidungskriterium von bekannten Lösungsverbrennungsverfahren ist die Abstimmung von Gehalt an Nitrat in der Lösung auf die Menge an Brennstoff für eine im wesentlichen vollständige Umsetzung, also Verbrennung, miteinander. Lösungsverbrennungsverfahren, wie etwa aus eingangs zitierter Literatur oder aus US-Patent 2,985,506 bekannt, sind dadurch charakterisiert, daß alkoholische Metallnitrat- bzw. Metallalkoholatlösungen mit hohem Lösungsmittelüberschuß in einer Luft- oder Sauerstoffatmosphäre verbrannt oder daß die Salzlösungen einfach durch eine eigenständig betriebene Flamme gesprüht werden. Die Energieerzeugung wird hierbei im wesentlichen durch Verbrennung des Lösungsmittels bzw. des Flammenbrennstoffes mit Hilfe von außen zugeführtem Sauerstoff bewirkt, wodurch ebenfalls im Prinzip die oben dargelegten negativen Effekte der Energiezuführung von außen zum Reaktionssystem auftreten. Überschüssige Gehalte an organischer Komponente bewirken im übrigen einen unerwünschten Kohlenstoffgehalt im resultierenden Oxid.

Das erfindungsgemäße Verfahren kann in vielgestaltiger Weise mit vergleichbarem Ergebnis durchgeführt werden, vorausgesetzt, die Abstimmung von Nitratsauerstoff und Brennstoff wird entsprechend eingehalten.

Stoffliche Quelle generell für die erfindungsgemäß herzustellenden oxidischen Keramikpulver sind entsprechende Metallnitrate, die in Form wäßriger Lösungen zum Einsatz kommen. Typische Beispiele hierfür sind die Nitrate von Na, K, Ca, Sr, Ba, Al, Zn, Sn, Fe, Co, Ni, Ti, Zr, Pb, Cu, Bi, Cr, Mn, Y, Gd, Eu.

Je nach Zusammensetzung und zu erzielender Eigenschaft der letztendlich herzustellenden Keramik werden diese Nitrate rein oder in entsprechend stöchiometrischem Gemisch eingesetzt. Für Elektronikkeramiken häufig in geringen Mengen benötigte Dotierstoffe können aus Löslichkeitsgründen auch in Form anderer Salze, beispielsweise von organischen Säuren, zugesetzt werden. Durch den Einsatz des Ausgangsmaterials als Lösung ist die homogene Gleichverteilung der Komponenten von Anfang an vorgegeben. In Einzelfällen, wenn schwerlösliche Dotierstoffe wie etwa Sb₂O₃, eingesetzt werden sollen, können der Lösung auch untergeordnete Mengen an hierfür übliche Lösungsvermittlern oder Komplexbildnern, wie beispielsweise Weinsäure, Zitronensäure, organische Amine, zugesetzt werden. Geringe Mengen unlöslicher Komponenten sind in dem Verfahren für das Ergebnis ebenfalls unschädlich, wenn sie in der Lösung homogen dispergiert sind, da auch hier durch die verfahrenstypisch extreme Temperatureinwirkung auf das Partikel im Prozeß chemische Inhomogenitäten im Endprodukt praktisch ausgeschlossen sind.

Die erfindungsgemäß geforderte spezifische Abstimmung des Gehaltes an Nitratsauerstoff in der Lösung auf den Brennstoff erfolgt individuell nach Art des Brennstoffes und Art der spezifischen Verfahrensausgestaltung. Hierbei kann es sinnvoll oder gar erforderlich sein, der Metallnitratlösung zusätzlich Salpetersäure, vorzugsweise konzentrierte Salpetersäure, zuzufügen. Dies kann erforderlich sein, um einerseits eine höhere Metallnitratkonzentration zu ermöglichen, etwa im Falle von in Wasser alleine nur in geringeren Konzentrationen löslichen Metallnitraten, oder um schwerlösliche Dotierungskomponenten so in Lösung zu halten. Andererseits und vorzugsweise kann zusätzliche Salpetersäure als weitere Sauerstoff lieferende Komponente dienlich sein, beispielsweise um die Energiebilanz im Hinblick auf den Energieverlust durch Lösungsmittelverdunstung zu kompensieren und/oder um vollständige Verbrennung des Brennstoffes zu bewirken.

Erfindungswesentlich ist, daß der durch pyrolytische Zersetzung aus dem Gesamtgehalt an Nitrat in der Lösung generierte Sauerstoff im wesentlichen für eine sich selbst tragende vollständige Verbrennung des Brennstoffes ausreicht. Dies ist insbesondere dann der Fall, wenn die Mengen an Sauerstoff lieferndem Nitrat in der Lösung und Brennstoff etwa stöchiometrisch im Hinblick auf eine im wesentlichen vollständige Verbrennung eingestellt sind. Der Ausdruck "im wesentlichen" ist hier so zu verstehen, daß der für eine vollständige Verbrennung des Brennstoffes erforderliche Sauerstoff zu mindestens 75 %, vorzugsweise zu mindestens 90 %, von dem Nitratgehalt der Lösung gedeckt wird. Der jeweilige Restbedarf kann durch atmosphärischen Sauerstoff gedeckt werden. Auch ein gewisser Überschuß an Nitratsauerstoff, etwa bis 25 %, ist tolerabel.

Für eine sich selbst tragende Verbrennung ist es erforderlich, daß die Gesamtenergiebilanz des Prozesses positiv ist, d. h., daß der für die Verdunstung von Lösungsmittel, Aufheizen der brennbaren Komponenten auf Zündtemperatur und Zersetzung von Nitrat erforderliche Energieaufwand zumindest kompensiert wird. Hierfür ist es zweckmäßig, den Gehalt der Lösung an inertem Lösungsmittel wie insbesondere Wasser möglichst gering zu halten. Diese Bedingung ist erfüllt, wenn der Gesamtnitratgehalt der Lösung mindestens 30 Gew.% beträgt. Vorzugsweise wird der Nitratgehalt entsprechend der Sättigungskonzentration eingestellt, was sich besonders günstig durch Verwendung von Salpetersäure, insbesondere von konzentrierter Salpetersäure, als Lösungsmittel bewerkstelligen läßt.

Für in dem erfindungsgemäßen Verfahren als Brennstoff fungierende Substanzen kommen in erster Linie gasförmige Kohlenwasserstoffe, aliphatische oder aromatische Kohlenwasserstoffe oder aliphatische Alkohole, Koblenstaub oder Gemische dieser Substanzen in Betracht. Die Anwendbarkeit ist jedoch nicht auf die in erster Linie aus wirtschaftlichen Gründen getroffene Auswahl beschränkt.

Gasförmige Kohlenwasserstoffe sind vorzugsweise Methan, Propan, Butan und Gemische hiervon. Erdgas, das im wesentlichen aus gasförmigen Kohlenwasserstoffen besteht, ist ein leicht verfügbarer und bsonders wirtschaftlicher Brennstoff.

Unter aliphatischen oder aromatischen Kohlenwasserstoffen oder aliphatischen Alkoholen sind im Prinzip alle entsprechenden, gängigen, organischen Lösungsmittel zu verstehen, wie beispielsweise Pentan, Hexan, Benzol, Toluol, Xylol, Methanol, Ethanol, Isopropanol aber Kohlenwasserstoffgemische wie Leicht- und Schwerbenzine, Dieselöl etc. Als fester Brennstoff kommt vornehmlich Kohlenstaub in Betracht.

Wesentlich für das erfindungsgemäße Verfahren und alle seine Ausgestaltungsformen ist, daß die eingesetzten Brennstoffe alle durch eine mindestens 250 °C heiße Zündungsquelle entzündbar sind.

Die spezifische Verfahrensdurchführung kann unterschiedlich ausgestaltet werden und je nach Ausgangssituation den stofflichen Gegebenheiten optimal angepaßt werden.

Eine Variante besteht darin, die Nitratlösung mit dem Brennstoff zunächst innig zu vermischen und dann im Gemisch der Verbrennung zuzuführen. Diese Variante kommt insbesondere dann in Betracht, wenn flüssige Brennstoffe eingesetzt werden sollen. Kohlenstaub kann aber auch gegebenenfalls zusammen mit flüssigen Brennstoffen mit der Lösung dispergiert und so im Gemisch verbrannt werden. Optimal ist diese Methode der Gemischverbrennung, wenn wasserlösliche bzw. wassermischbare Brennstoffe, wie etwa aliphatische Alkohole, eingesetzt werden.

Eine andere Variante besteht darin, Nitratlösung und Brennstoff getrennt zuzuführen und erst bei der Verbrennung innig zu vermischen. Diese Variante ist dann zu bevorzugen, wenn es sich bei den Brennstoffen um nicht mit Wasser mischbare Flüssigkeiten wie Kohlenwasserstoffe handelt. Optimal ist diese Methode, wenn gasförmige Kohlenwasserstoffe als Brennstoff eingesetzt werden. Es ist dies eine besonders bevorzugte Ausführungsform des erfindungsgemäßen Verfahrens.

Eine weitere Variante besteht darin, sowohl Nitratlösung und Brennstoff im Gemisch als auch zusätzlichen Brennstoff getrennt der Verbrennung zuzuführen. Diese Variante kommt besonders dann in Betracht, wenn gleichzeitig gasförmige, flüssige und gegebenenfalls feste Brennstoffe eingesetzt werden sollen. Günstig läßt sich diese Methode handhaben, wenn vom eingesetzten Brennstoff etwa 10-20 Gew.% in fester, 50-70 Gew.% in flüssiger und 20-30 Gew.% in gasförmiger Form vorliegen.

Gemeinsames Merkmal aller dieser Varianten ist, daß die Komponenten, ob im Gemisch oder getrennt, in einen Reaktionsraum gesprüht und dort durch eine mindestens 250 °C heiße Zündquelle gezündet werden. Hierbei erfolgt in jedem Fall eine heftige Verbrennungsreaktion in Form einer Flammenzone aus der die gebildeten Festpartikel in einem hell glühenden Funkenregen austreten. Anhand der Farbtemperatur des abgegebenen Lichtes kann geschlossen werden, daß in den Partikeln Temperaturen von mindestens 1000 °C, meist aber mindestens 2000 °C oder erheblich darüber, herrschen. Durch diese schlagartige Umwandlung der Flüssigkeitströpfchen in Festpartikel durch extreme Temperatur sind die erhaltenen Oxidpulver chemisch homogen und da sie praktisch in jedem Fall Temperaturen oberhalb der Schmelztemperatur durchlaufen haben, in ihrer Partikelstruktur massiv und unporös und weitestgehend sphärisch. Die zu erzielende Partikelgröße ist im wesentlichen abhängig von der chemischen Zusammensetzung der versprühten Lösung, von deren Konzentration sowie der Tröpfchengröße, die wiederum in bekannter Weise durch die Art der Sprühtechnik beeinflußt werden kann. Die spezifischen Verfahrensparameter des erfindungsgemäßen Verfahrens bringen es mit sich, daß die Oxidpartikel in einer engen Teilchengrößenverteilung anfallen. Da Calcinierungs- und Mahloperationen nicht mehr erforderlich sind, können die erfindungsgemäß erhaltenen Oxidpulver sofort als Rohstoffe für Keramiken eingesetzt werden.

Darüber hinaus ist das erfindungsgemäße Verfahren energetisch erheblich günstiger als gängige pyrolytische Verfahren. Da sich das System durch exotherme Reaktion selbst aufheizt, und zwar spezifisch dort, wo die Energie zur Umsetzung benötigt wird, fallen energiezehrende Vorgänge der Auf- und Beheizung des Reaktors durch externe Wärmequellen weg.

Das erfindungsgemäße Verfahren kann in allen seinen Varianten grundsätzlich in Vorrichtungen bzw. Anlagen durchgeführt werden, wie sie vom Prinzip her von üblichen Sprühpyrolyseverfahren bekannt sind. Derartige Vorrichtungen und Anlagen bestehen meist aus einem Rohrreaktor, der im Prinzip aufgebaut ist aus einer Einlaßzone für das zu versprühende Medium, einer Reaktionszone, in der der Pyrolysevorgang abläuft und einer Auslaßzone, die in eine Vorrichtung zum Abscheiden des Reaktionsproduktes mündet. Die Einlaßzone besteht hierbei meist aus einer oder mehrerer Düsen, durch die das Medium, gegebenenfalls auch gesteuert, versprüht wird. Die Reaktionszone ist meist indirekt durch einen Ofen oder direkt durch zugeführte heiße Verbrennungsgase beheizt. Das Auffangen des Reaktionsproduktes erfolgt meist durch Filter, Auffangkammern, einen oder mehrere Zyklone. Dem einschlägigen Fachmann sind die entsprechenden Anlagen und technischen Möglichkeiten geläufig und er kann sie problemlos auf die spezifischen Gegebenheiten des erfindungsgemäßen Verfahrens anwenden. Die Dimensionierung einer entsprechenden Anlage ist abhängig von der gewünschten Produktionskapazität und der Fabrweise, also ob teil- oder dauerkontinuierlicher Betrieb vorgesehen ist. Anlagen mit Stundenleistungen an produziertem Oxidpulver zwischen 10 g und Kg-Mengen sind ohne weiteres und ohne wesentliche prinzipielle Änderungen nur durch entsprechende Wahl der Dimensionen realisierbar.

Für die Durchführung des Verfahrens ist es erforderlich, daß das in den Reaktor gesprühte bzw. sich dort bildende Lösungs-Brennstoff-Gemisch gezündet wird, so daß sich die Reaktion in Form einer sich selbst tragenden, vollständigen Verbrennung einstellt. Hierzu muß das Gemisch in Kontakt mit einer mindestens 250 °C heißen Zündquelle kommen. Als derartige Zündquellen kommen beispielsweise in Betracht die entsprechend von außen aufgeheizte Rohrwandung des Reaktors oder separat im Reaktor installierte Zündquellen wie Glühkerzen, Zündkerzen, Zündflamme, elektrisch beheizte Glühdrähte oder Glühgitter Als besonders zweckmäßig und wirksam erweist sich die Zündung mittels eines mit Gas und Luft betriebenen Zündbrenners.

Wenn die Reaktion angefahren ist, d.h. nach Zündung des Reaktionsgemisches und Ausbildung einer kostanten Verbrennungsreaktion bei kontinuierlicher Zufuhr des Reaktionsgemisches, stellen sich im Reaktor schnell derartig hohe Temperaturen ein, typisch über 1000 °C, daß ein weiterer Betrieb der Zündungsquelle normalerweise entbehrlich ist. Lediglich zur Betriebssicherheit, etwa in kritischeren Einzelfällen, kann es aber sinnvoll sein, die Zündungsquelle, vorzugsweise in Form einer Stützflamme, weiter zu betreiben.

Für die besonders bevorzugte Variante des erfindungsgemäßen Verfahrens, nämlich der Verbrennung der Nitratlösung in Gegenwart von gasförmigen Kohlenwasserstoffen als Brennstoff, ist es zweckmäßig, die Gaszuführung gleich in Form eines Gasbrenners zu gestalten, in dessen Flammenzone die Nitratlösung eingesprüht wird. Für das Anfahren des Betriebes sorgt man durch entsprechende Luftzufuhr zunächst für eine Zündung und Verbrennung des Brenngases und regelt nach Zuschaltung der Lösungseinsprühung die Gasmengen-, Luftmengen- und Lösungsmengezufuhr so ein, daß durch die Pyrolyse der Nitratlösung im wesentlichen die Verbrennung des Brenngases erfolgt. Diese Regelung läßt sich beispielsweise günstig mit Hilfe einer im Reaktor installierten Lambda-Sonde erreichen, die im Reaktionsabgas den Sauerstoffpartialdruck mißt, anhand dessen sich eine im wesentlichen Stöchiometrische Verbrennung einstellen läßt.

Eine insbesondere hinsichtlich Düsen- bzw. Brennerkonstruktion besonders günstige Ausführungsform einer Vorrichtung bzw. Anlage mit der auch das erfindungsgemäße Verfahren sehr vorteilhaft durchgeführt werden kann, ist Gegenstand einer parallelen Patentanmeldung.

### Beispiele

### Apparatur und Durchführung

Als Apparatur dient ein horizontal angeordneter Rohrraktor von 300 cm Länge und 20 cm Innendurchmesser. Am Kopfende befindet sich ein Gasbrennerkopf, dessen Düsen mit Propan-Butan-Gemisch und Luft gespeist werden, mit elektrischer Zündung. Durch eine im Brennerkopf zentral angeordnete Düse wird das Reaktionsgemisch in den Flammenkegel eingespritzt.

Im rückwärtigen Bereich des Reaktors ist eine handelsübliche Lambdasonde installiert, mit deren Hilfe über die Regelung der Gas-/Luft-Zufuhr die Reaktoratmosphäre (λ = 1,0: neutral, λ > 1,0: oxidierend, λ < 1,0: reduzierend) eingestellt werden kann.

Das Oxidpulver wird in nachgeschalteten Kammerfiltern gesammelt.

### Beispiel 1

Eine Lösung zur Herstellung eines Varistorpulvers enthaltend in 65%iger HNO₃
659,9 g/l Zn (NO₃)₂ · 6 H₂O
22,2 g/l Bi (NO₃)₃ · 5 H₂O
2,9 g/l Mn (NO₃)₂ · 4 H₂O
9,2 g/l Cr (NO₃)₃ · 9 H₂O
10,0 g/l Co (NO₃)₃ · 6 H₂O
3,3 g/l Sb₂O₃
276 g/l Weinsäure (als Brennstoff) wurde mit einer Dosierung von 3,0 l/h in den Flammenkegel der Apparatur gesprüht, wobei über die Gas-/Luftmengenzufuhr die Reaktoratmosphäre auf einen Wert λ = 0,90 (reduzierend) geregelt wurde. Die Reaktortemperatur lag bei 1020-1050 °C.

Es wurde ein Varistorpulver erhalten mit kompakten Partikeln, deren mittlere Größe bei ca. 0,4 µm liegt.

### Beispiel 2 (Vergleich)

Eine Varistorlösung wie in Beispiel 1, jedoch ohne Gehalt an Brennstoff Weinsäure, wurde in gleicher Weise in den Reaktor gesprüht. Die Verbrennung wurde ausschließlich vom Gas-/Luftbrenner aufrecht erhalten, wobei die Reaktoratmosphäre auf einen Wert λ = 1,05 (oxidierend) geregelt wurde. Die Reaktortemperatur lag bei 1030-1050 °C.

Es wurde ein Varistorpulver erhalten, dessen Partikel eine hohe Porosität, deutliche Hohlkugelformen und Bruchstücke hiervon aufweisen. Der überwiegende Teil der Partikel hat eine Größe um ca. 20 µm.

### Beispiel 3

Zur Herstellung von 1 Mol Bi₂Ti₂O₇-Pulver wurde ein Gemisch aus 1982,9 g 39,8%iger Bi(NO₃)₃-Lösung in 6,3%iger HNO₃ und 1008,2 g 58,7%iger TiO(NO₃)₂-Lösung mit einer Dosierung von 20 l/h in den Flammenkegel der Apparatur gesprüht, wobei durch Drosselung der Luftmengenzufuhr des Brenners in der Reaktoratmosphäre ein Wert λ = 0,85 (reduzierend) eingestellt wurde. Die Reaktortemperatur lag bei 1130-1180 °C. Es wurde ein Pulver erhalten mit kompakten Partikeln einer bimodalen Größenverteilung, deren mittlere Größen bei ca. 1 µm und ca 0,1 µm liegen.

## Patentansprüche

1. Sprühpyrolytisches Verfahren zur Herstellung von oxidischen Keramikpulvern durch Verbrennung entsprechende Metallnitrate enthaltender wäßriger Lösungen in Gegenwart von als Brennstoff fungierenden organischen Substanzen oder elementarem Kohlenstoff, dadurch gekennzeichnet, daß die Menge an Nitrat in der Lösung auf die Menge an Brennstoff so abgestimmt ist, daß nach Zündung eine sich weitgehend selbst tragende Verbrennung abläuft, bei der der Nitratsauerstoff im wesentlichen die vollständige Verbrennung des Brennstoffes bewirkt.

2. Verfahren nach Anspruch 1, dadurch gekennzeichnet, daß die Lösung zusätzlich als Sauerstoff liefernde Komponente Salpetersäure enthält.

3. Verfahren nach den Ansprüchen 1 und 2, dadurch gekennzeichnet, daß die Mengen von Sauerstoff lieferndem Nitrat und Brennstoff etwa stöchiometrisch für eine im wesentlichen vollständige Verbrennung eingestellt sind.

4. Verfahren nach den Ansprüchen 1 bis 3, dadurch gekennzeichnet, daß der Nitratgehalt der Lösung mindestens 30 Gew.%, vorzugsweise entsprechend der Sättigungskonzentration, beträgt.

5. Verfahren nach mindestens einem der Ansprüche 1 bis 4, dadurch gekennzeichnet, daß als Brennstoff gasförmige Kohlenwasserstoffe, aliphatische oder aromatische Kohlenwasserstoffe oder aliphatische Alkohole, Kohlenstaub oder Gemische hiervon eingesetzt werden.

6. Verfahren nach mindestens einem der Ansprüche 1 bis 5, dadurch gekennzeichnet, daß Nitratlösung und Brennstoff im Gemisch miteinander der Verbrennung zugeführt werden.

7. Verfahren nach Anspruch 6, dadurch gekennzeichnet, daß das Gemisch aus Nitratlösung und Brennstoff in einen Reaktionsraum gesprüht und dort durch eine mindestens 250 °C heiße Zündquelle gezündet wird.

8. Verfahren nach mindestens einem der Ansprüche 1 bis 5, dadurch gekennzeichnet, daß Nitratlösung und Brennstoff getrennt zugeführt und erst bei der Verbrennung gemischt werden.

9. Verfahren nach Anspruch 8, dadurch gekennzeichnet, daß Nitratlösung und Brennstoff getrennt in einen Reaktionsraum gesprüht und dort im Gemisch durch eine mindestens 250 °C heiße Zündquelle gezündet werden.

10. Verfahren nach Anspruch 8 oder 9, dadurch gekennzeichnet, daß als Brennstoff gasförmige Kohlenwasserstoffe eingesetzt werden.

11. Verfahren nach Anspruch 10, dadurch gekennzeichnet, daß als Brennstoff Methan, Propan, Butan, Gemische hiervon, oder Erdgas eingesetzt werden.

12. Verfahren nach mindestens einem der Ansprüche 1 bis 5, dadurch gekennzeichnet, daß sowohl Nitratlösung und Brennstoff im Gemisch als auch zusätzlicher Brennstoff getrennt der Verbrennung zugeführt werden.

13. Verfahren nach Anspruch 12, dadurch gekennzeichnet, daß die Komponenten in einen Reaktionsraum gesprüht und dort durch eine mindestens 250 °C heiße Zündquelle gezündet werden.

14. Verfahren nach Anspruch 12 oder 13, dadurch gekennzeichnet, daß vom eingesetzten Brennstoff 10 bis 20 Gew.% in fester, 50 bis 70 Gew.% in flüssiger und 20 bis 30 Gew.% in gasförmiger Form vorliegen.

## Claims

1. Spray-pyrolytic process for the preparation of oxidebased ceramic powders by combustion of aqueous solutions containing corresponding metal nitrates in the presence of organic substances or elementary carbon acting as fuel, characterized in that the amount of nitrate in the solution is matched to the amount of fuel in such a way that, after ignition, a substantially self-supporting combustion takes place in which the nitrate oxygen essentially effects the complete combustion of the fuel.

2. Process according to Claim 1, characterized in that the solution additionally contains nitric acid as oxygen-supplying component.

3. Process according to Claims 1 and 2, characterized in that the amounts of oxygen-supplying nitrate and fuel are adjusted approximately stoichiometrically for an essentially complete combustion.

4. Process according to Claims 1 to 3, characterized in that the nitrate content of the solution is at least 30 % by weight, preferably corresponding to the saturation concentration.

5. Process according to at least one of Claims 1 to 4, characterized in that gaseous hydrocarbons, aliphatic or aromatic hydrocarbons or aliphatic alcohols, coal dust or mixtures thereof are used as fuel.

6. Process according to at least one of Claims 1 to 5, characterized in that nitrate solution and fuel are supplied in the form of a mixture with one another to the combustion.

7. Process according to Claim 6, characterized in that the mixture of nitrate solution and fuel is sprayed into a reaction chamber where it is ignited by a hot ignition source which is at a temperature of at least 250°C.

8. Process according to at least one of Claims 1 to 5, characterized in that nitrate solution and fuel are supplied separately and mixed only during the combustion.

9. Process according to Claim 8, characterized in that nitrate solution and fuel are sprayed separately into a reaction chamber, where they are ignited as a mixture by a hot ignition source which is at a temperature of at least 250°C.

10. Process according to Claim 8 or 9, characterized in that gaseous hydrocarbons are used as fuel.

11. Process according to Claim 10, characterized in that methane, propane, butane, mixtures thereof, or natural gas are used as fuel.

12. Process according to at least one of Claims 1 to 5, characterized in that both nitrate solution and fuel, in the form of a mixture, and also additional fuel are supplied separately to the combustion.

13. Process according to Claim 12, characterized in that the components are sprayed into a reaction chamber, where they are ignited by a hot ignition source which is at a temperature of at least 250°C.

14. Process according to Claim 12 or 13, characterized in that 10 to 20 % by weight of the fuel employed is in solid form, 50 to 70 % by weight is in liquid form and 20 to 30 % by weight is in gaseous form.

## Revendications

1. Procédé pyrolytique avec pulvérisation pour la production de poudres céramiques à base d'oxydes par combustion de solutions aqueuses, contenant des nitrates métalliques correspondants, en présence de substances organiques ou de carbone élémentaire opérant comme combustible, caractérise en ce que la quantité de nitrate dans la solution est adaptée à la quantité de combustible de telle sorte qu'après inflammation se déroule une combustion se propageant par elle-même dans une large mesure et dans laquelle l'oxygène du nitrate assure dans l'essentiel la combustion complète du combustible.

2. Procédé selon la revendication 1, caractérisé en ce que la solution contient additionnellement, comme composant fournissant de l'oxygène, de l'acide nitrique.

3. Procédé selon les revendications 1 et 2, caractérisé en ce que les quantités de nitrate fournissant l'oxygène et de combustible sont réglées de façon à peu stoechiométrique pour une combustion sensiblement complète.

4. Procédé selon les revendications 1 à 3, caractérisé en ce que la teneur en nitrate de la solution s'élève au moins à 30 % en poids, avantageusement en correspondance à la concentration de saturation.

5. Procédé selon au moins une des revendications 1 à 4, caractérisé en ce qu'on utilise comme combustible des hydrocarbures sous forme gazeuse, des hydrocarbures aliphatiques ou aromatiques ou des alcools aliphatiques, de la poussière de charbon ou leurs mélanges.

6. Procédé selon au moins une des revendications 1 à 5, caractérisé en ce que la solution de nitrate et le combustible sont introduits dans la combustion en étant mélangés l'un avec l'autre.

7. Procédé selon la revendication 6, caractérisé en ce que le mélange de solution de nitrate et de combustible est pulvérisé dans une chambre de réaction et est enflammé dans celle-ci par un système d' inflammation chauffé à au moins 250°C.

8. Procédé selon au moins une des revendications 1 à 5, caractérisé en ce que la solution de nitrate et le combustible sont introduits séparément et sont mélangés seulement lors de la combustion.

9. Procédé selon la revendication 8, caractérisé en ce que la solution de nitrate et le combustible sont pulvérisés séparément dans une chambre de réaction et sont enflammés dans celle-ci, en étant mélangés, au moyen d'un système d'inflammation chauffé à au moins 250°C.

10. Procédé selon la revendication 8 ou 9, caractérisé en ce comme combustible, on utilise des hydrocarbures sous forme gazeuse.

11. Procédé selon la revendication 10, caractérisé en ce qu'on utilise comme combustible du méthane, du propane, du butane, leurs mélanges, ou du gaz naturel.

12. Procédé selon au moins une des revendications 1 à 5, caractérisé en ce qu'on introduit dans la combustion aussi bien de la solution de nitrate et du combustible en mélange que séparément du combustible additionnel.

13. Procédé selon la revendication 12, caractérisé en ce que les composants sont pulvérisés dans une chambre de réaction et sont enflammés dans celle-ci par un système d'inflammation chauffé à au moins 250°C.

14. Procédé selon la revendication 12 ou 13, caractérisé en ce que, dans le combustible utilisé, 10 à 20% en poids se présentent dans une forme solide, 50 à 70 % en poids dans une forme liquide et 20 à 30 % en poids dans une forme gazeuse.
